# EUROPÄISCHE PATENTANMELDUNG

(11) **EP 0 994 461 A2**
(43) Veröffentlichungstag der Anmeldung: **19.04.2000**
(21) Anmeldenummer: 99203303.5
(22) Anmeldetag: 07.10.1999
(51) Int. Cl.: G10L 15/22

(54) **Verfahren zur automatischen Erkennung einer buchstabierten sprachlichen Äusserung**

(30) Priorität: 14.10.1998 DE 19847419
(71) Anmelder: Philips Corporate Intellectual Property GmbH, 52064 Aachen (DE); Koninklijke Philips Electronics N.V., 5621 BA Eindhoven (NL)
(72) Erfinder: Wuppermann, Friedhelm, 52064 Aachen (DE); Stahl, Volker, 52064 Aachen (DE)
(74) Vertreter: Gössmann, Klemens

(57) **Zusammenfassung**

Die Erfindung betrifft ein Verfahren zur automatischen Erkennung einer wenigstens teilweise buchstabierten sprachlichen Äußerung mit einer auf statistischen Modellen einschließlich eines linguistischen Sprachmodells (6) basierenden Spracherkennungseinheit (2).

Um dieses Verfahren so zu verbessern, daß neben einer komfortablen Eingabe auch eine verringerte Spracherkennungsfehlerrate erreicht wird, wird vorgeschlagen, daß
- nach Eingabe der wenigstens teilweise buchstabierten sprachlichen Äußerung die Spracherkennungseinheit (2) ein erstes Erkennungsergebnis für die gesamte sprachliche Äußerung ermittelt;
- einzelne erkannte Buchstaben an den Benutzer zur Bestätigung oder Ablehnung ausgegeben werden;
- nach Bestätigung eines Buchstabens eine Anpassung des linguistischen Sprachmodells (6) vorsehen ist, das nach seiner Anpassung die Menge solcher Buchstaben festlegt, die als Nachfolger für den bestätigten Buchstaben zulässig sind, und das die Richtigkeit bereits bestätigter Buchstaben voraussetzt;
- die Spracherkennungseinheit (2) mittels des angepaßten linguistischen Sprachmodells (6) ein weiteres Erkennungsergebnis für die sprachliche Äußerung ermittelt, aus dem der nächste an den Benutzer zur Bestätigung auszugebende Buchstabe bestimmt wird.

## Beschreibung

Die Erfindung betrifft ein Verfahren zur automatischen Erkennung einer wenigstens teilweise buchstabierten sprachlichen Äußerung mit einer auf statistischen Modellen einschließlich eines linguistischen Sprachmodells basierenden Spracherkennungseinheit.

Die automatische Erkennung buchstabierter sprachlicher Äußerungen ist zum gegenwärtigen Zeitpunkt noch mit hohen Fehlerraten behaftet. Einerseits besteht die Schwierigkeit, die Grenzen zwischen den einzelnen Buchstaben zu detektieren, da ein Benutzer beim Buchstabieren die einzelnen Buchstaben regelmäßig ohne Pausen, d.h. Stillephasen zwischen den Buchstaben, ausspricht. Weiterhin ist die akustische Modellierung der kurze sprachliche Einheiten darstellenden und ohne Kontext zu verarbeitenden Buchstaben schwierig.

Auf dem Gebiet der Navigationssysteme für Landkraftfahrzeuge ist es bekannt, einem Benutzer einen Eingabemodus zur Verfügung zu stellen, in dem die Eingabe von Navigationsdaten - beispielsweise Ortsnamen - durch Buchstabieren erfolgt (vgl. das Navigationssystem CARIN).

Bei der im folgenden kurz erläuterten Eingabe eines Ortsnamens in ein solches Navigationssystem werden dem Benutzer nach der Aktivierung des Eingabemodus zur Eingabe von Ortsnamen auf einem Bildschirm die eingebbaren Buchstaben des jeweiligen Alphabets angezeigt. Durch Drehen eines Multifunktionsknopfes kann der Benutzer zwischen den einzelnen Buchstaben hin- und herschalten. Die Auswahl und damit Eingabe eines Buchstabens erfolgt durch Druckausübung auf den Multifunktionsknopf. Vor der Eingabe des ersten Buchstabens des jeweiligen Ortsnamens werden dem Benutzer alle Buchstaben des jeweiligen Alphabets zur Auswahl angeboten. Nachdem der Benutzer einen ersten Buchstaben ausgewählt hat, führt das Navigationssystem einen Abgleich mit einer Datenbank, die auf einer Compact Disk (CD) abgespeichert ist, durch. Das Ergebnis liefert Informationen darüber, welche Buchstaben in den vom System verarbeitbaren Ortsnamen aufeinander folgen können. Nachdem also der Benutzer einen ersten Buchstaben eingeben hat, wird der Abgleich mit der Datenbank dazu führen, daß nicht mehr das gesamte Alphabet für die Eingabe des nächsten Buchstabens in Frage kommt, sondern nur noch eine Teilmenge des Alphabets. Als zweiter Buchstabe läßt sich demgemäß dann nur noch ein zu dieser Teilmenge gehöriger Buchstabe mittels des Multifunktionsknopfes auswählen. Mit jeder Eingabe eines Buchstabens reduziert sich in den meisten Fällen die Teilmenge auswählbarer Buchstaben; in Ausnahmefällen kann eine solche Teilmenge nach Eingabe eines Buchstabens auch unverändert bleiben. Für den Fall, daß auf eine bestimmte eingegebene Buchstabenfolge nur ein bestimmter Buchstabe oder eine bestimmte Buchstabenfolge nachfolgen kann, ist die Eingabe dieser Buchstaben durch den Benutzer nicht mehr erforderlich, sondern das Navigationssystem setzt automatisch diese(n) Buchstaben als durch den Benutzer eingegeben voraus. Der beschriebene Eingabemodus führt zu einer schnelleren und für den Benutzer komfortableren Eingabe von buchstabierten Ortsnamen.

Der Erfindung liegt nun die Aufgabe zugrunde, daß eingangs erwähnte Verfahren zur automatischen Erkennung einer buchstabierten sprachlichen Äußerung so zu verbessern, daß neben einer komfortablen Eingabe auch eine verringerte Spracherkennungsfehlerrate erreicht wird.

Die Aufgabe wird dadurch gelöst, daß
- nach Eingabe des buchstabierten Teils der sprachlichen Äußerung die Spracherkennungseinheit ein erstes Erkennungsergebnis für die sprachliche Äußerung ermittelt;
- einzelne erkannte Buchstaben an den Benutzer zur Bestätigung oder Ablehnung ausgegeben werden;
- nach Bestätigung eines Buchstabens eine Anpassung des linguistischen Sprachmodells vorsehen ist, das nach seiner Anpassung die Menge solcher Buchstaben festlegt, die als Nachfolger für den bestätigten Buchstaben zulässig sind, und das die Richtigkeit bereits bestätigter Buchstaben voraussetzt;
- die Spracherkennungseinheit mittels des angepaßten linguistischen Sprachmodells ein weiteres Erkennungsergebnis für die sprachliche Äußerung ermittelt, aus dem der nächste an den Benutzer zur Bestätigung auszugebende Buchstabe bestimmt wird.

Durch die Verarbeitungsschritte, in denen der Benutzer zur Bestätigung oder Ablehnung von erkannten Buchstaben aufgefordert wird, wird dem System sukzessive eine Rückkopplung bezüglich der Richtigkeit des bis dahin vorliegenden Erkennungsergebnisses bezogen auf die zu erkennende sprachliche Äußerung gegeben. Die zu erkennende sprachliche Äußerung kann ein Einzelwort oder eine Wortfolge sein, wobei die bei dem erfindungsgemäßen Verfahren verarbeitete Eingabe die gesamte sprachliche Äußerung in buchstabierter Form oder ein Teil der sprachlichen Äußerung in buchstabierter Form ist. Die sukzessive Rückkopplung wird zur schrittweisen Verbesserung der im Spracherkenner verwendeten statistischen Modellierung durch Reduzierung des Suchraums verwendet. Dies führt dazu, daß mit jeder Verbesserung die Wahrscheinlichkeit sinkt, daß an den Benutzer ein falscher Buchstabe zur Bestätigung ausgegeben wird, was wiederum die erforderliche Zeitdauer bis zum Abschluß der Erkennung der buchstabierten sprachlichen Äußerung absenkt. Das Verfahren erhöht somit den Komfort für den Benutzer. Die in der Spracherkennungseinheit verwendeten akustischen Modelle, die auf der Grundlage des buchstabierten Teils der sprachlichen Äußerung geschätzt wurden, müssen bei der erfindungsgemäßen Erkennungsprozedur nicht angepaßt werden. Lediglich das jeweils verwendete linguistische Modell ist abhängig von der gerade bearbeiteten Position innerhalb der sprachlichen Äußerung.

Zur Reduzierung des Suchraums bei der Spracherkennung werden üblicherweise linguistische Sprachmodelle verwendet. Dies reduziert einerseits den von der Spracherkennungseinheit zu bewältigenden Rechenaufwand und bewirkt andererseits auch eine Verbesserung des Erkennungsergebnisses. Allerdings besteht das Problem, daß ein langreichweitiges linguistisches Sprachmodell zu großen akustischen Suchräumen führt. Die Verarbeitung eines solchen Sprachmodells erfordert sehr viel Speicherplatz und ist derzeit mit üblichen für Spracherkennungsanwendungen verwendeten Signalprozessoren nicht realisierbar oder unwirtschaftlich. Bei der Erfindung ist die Komplexität des verwendeten linguistischen Sprachmodells dagegen auf ein Minimum reduziert. Es wird sukzessive in Abhängigkeit von den Bestätigungen von Buchstaben durch den Benutzer angepaßt. Dabei werden bereits bestätigte Buchstabenfolgen als gegeben vorausgesetzt. Lediglich für den zuletzt bestätigten Buchstaben wird mit Hilfe des linguistischen Sprachmodells ermittelt, welche Buchstaben als Nachfolgebuchstabe in Fragen kommen. Ein solches Sprachmodell ist äußerst unkompliziert und leicht mittels üblicher Signalprozessoren mit einem geringen Rechen- und Speicheraufwand in den verwendeten Spracherkennungsprozeduren umzusetzen.

Für den Fall einer Ablehnung eines erkannten Buchstabens durch den Benutzer werden kommen vorzugsweise zwei Alternativen für eine Weiterverarbeitung in Betracht. Einerseits kann die Spracherkennungseinheit nach einer diese Information verarbeitenden Anpassung des linguistischen Sprachmodells einen erneuten Erkennungsvorgang bezüglich der gesamten sprachlichen Äußerung durchführen. Hierbei wird die Wahrscheinlichkeit erheblich erhöht, daß an den Benutzer als nächstem Buchstabenvorschlag der korrekte Buchstabe ausgegeben wird. Anderseits besteht auch die Möglichkeit, daß die Spracherkennungseinheit als Erkennungsergebnis eine Liste N bester Erkennungsalternativen für die sprachliche Äußerung ermittelt und daß nach einer Ablehnung eines erkannten Buchstabens durch den Benutzer der entsprechende Buchstabe der zweitbesten Lösungsalternative an den Benutzer ausgegeben wird. Dies hat den Vorteil, daß nach einer Ablehnung eines als Erkennungsvorschlag an den Benutzer ausgebenen Buchstabens von der Spracherkennungseinheit nicht erneut die Spracherkennungsprozeduren bezüglich der (gesamten) buchstabierten sprachlichen Äußerung durchzuführen sind, was bewirkt, daß nach einer Ablehnung eines ausgegebenen Buchstabens durch den Benutzer mit minimaler Zeitverzögerung eine weitere Buchstabenalternative an den Benutzer ausgegeben wird.

Werden einzelnen Buchstaben individuelle, insbesondere von allen Vorgängerbuchstaben abhängige positionsspezifische Wahrscheinlichkeitswerte zugeordnet, was als Spezifizierung des verwendeten linguistischen Sprachmodells umsetzbar ist, erhöht sich die Wahrscheinlichkeit, daß schon ein erster an den Benutzer ausgegebener Vorschlag für einen an einer bestimmten Stelle der zu erkennenden sprachlichen Äußerung stehenden Buchstaben richtig ist und vom Benutzer bestätigt wird. Hier wird ausgenutzt, daß bestimmte Buchstabenkombinationen häufiger auftreten als andere Buchstabenkombinationen.

In einer anderen Ausgestaltung der Erfindung wird bei der Ermittlung einer Alternative zu einem durch den Benutzer abgelehnten Buchstaben der durch Wahrscheinlichkeitswerte ausgedrückte Grad der Verwechselbarkeit mit anderen Buchstaben berücksichtigt. Bestimmte Buchstaben, wie beispielsweise "d" und "t", ähneln sich akustisch mehr als andere Buchstaben. Dies kann als Information im linguistischen Sprachmodell so umgesetzt werden, daß bei der Ablehnung eines solchen Buchstabens durch den Benutzer eine im Vergleich zur Wahrscheinlichkeit anderer Buchstaben höhere Wahrscheinlichkeit dafür angenommen wird, daß ein diesem Buchstaben als akustisch ähnlich definierter Buchstabe der richtige und tatsächlich als Teil der buchstabierten sprachlichen Äußerung eingegebener Buchstabe ist.

Als weitere Ausgestaltung wird vorgeschlagen, daß ungültige und fälschlicherweise erkannte Anfangsbuchstabenkombinationen im linguistischen Sprachmodell als unzulässig definiert und dem Benutzer nicht vorgeschlagen werden und daß die Spracherkennungseinheit mittels des angepaßten linguistischen Sprachmodells in solch einem Fall ein weiteres Erkennungsergebnis für die sprachliche Äußerung ermittelt, aus dem der an den Benutzer zur Bestätigung auszugebende Buchstabe bestimmt wird. Um das Sprachmodell klein zu halten, werden unzulässige Anfangsbuchstabenkombinationen als solche erst dann ins Sprachmodell aufgenommen, wenn sie der Spracherkenner fälschlicherweise hypothetisiert hat. Wird vorausgesetzt, daß die eingegebene sprachliche Äußerung nur Wörter einer begrenzten Wortmenge enthält, beispielsweise bei der Eingabe in ein Navigationssystem für Landkraftfahrzeuge in einem bestimmten Eingabemodus nur Ortsnamen, kann mittels dieser Erfindungsvariante das zugrundeliegende linguistische Sprachmodell entsprechend angepaßt werden, da die Menge möglicher Spracherkennungsergebnisse bezüglich der eingegebenen sprachlichen Äußerung tatsächlich als beschränkt angenommen werden kann. Dies führt zu einem reduzierten Suchraum des Spracherkenners und schließlich zu einer Vermeidung von vorgeschlagenen Erkennungsergebnissen mit a priori falschen und nicht in Frage kommen Anfangsbuchstaben oder Anfangsbuchstabenkombinationen.

Die Erfindung bezieht sich auch auf ein elektrisches Gerät, insbesondere Navigationssystem für Landkraftfahrzeuge, zur Durchführung eines der oben beschriebenen Verfahren. Es kommen alle elektrischen Geräte mit eine Spracherkennungseinheit einschließenden Funktionseinheiten in Betracht, bei denen auch eine Eingabe mittels buchstabierter sprachlicher Äußerungen möglich ist.

Ausführungsbeispiele der Erfindung werden im folgenden anhand der Figuren näher erläutert. Es zeigen:
- Fig. 1: die in Form von erfindungswesentlichen Funktionsblöcken dargestellte Grundstruktur eines erfindungsgemäßen elektrischenGeräts und
- Fig. 2 und 3: zwei zur Spracherkennung verwendete linguistische Sprachmodelle.

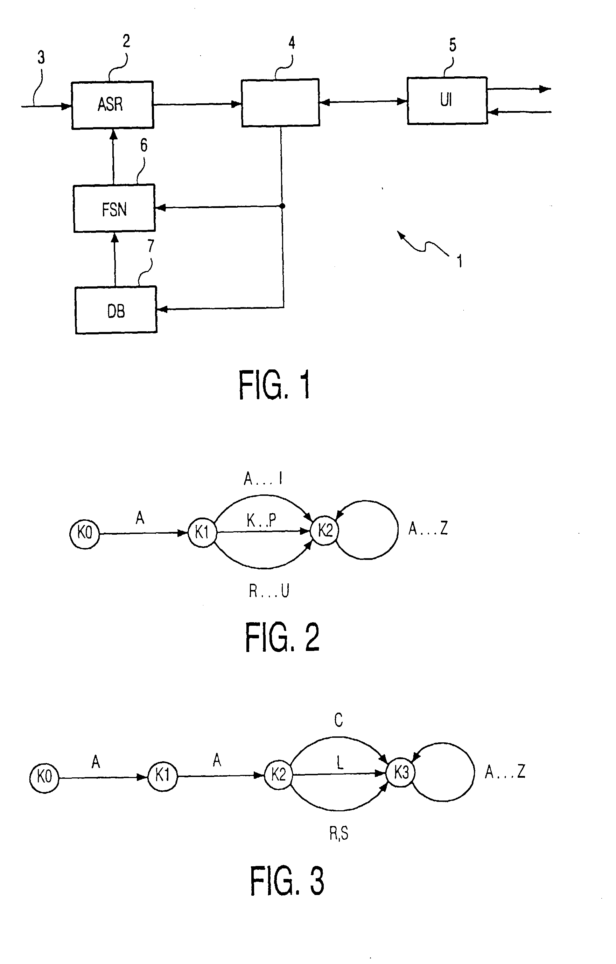

Das in Fig. 1 dargestellte elektrische Gerät 1, insbesondere ein Navigationssystem für Landkraftfahrzeuge, ist mittels Funktionsblöcken dargestellt, die die erfindungswesentlichen Funktionen des Geräts 1 darstellen. Andere Funktionen des elektrischen Geräts sind aus Gründen der Übersichtlichkeit außer Betracht gelassen. Ein Funktionsblock 2 stellt eine Spracherkennungseinheit ("automatic speech recognizer", ASR) dar, der an ihrem Eingang 3 eine in Form von Merkmalsvektoren vorliegende buchstabierte sprachliche Äußerung zugeführt wird.

Bei einem Navigationssystem für Landkraftfahrzeuge wird beispielsweise in einem bestimmten Eingabemodus ein Ortsname als Fahrziel in buchstabierter Form eingegeben. Das dieser sprachlichen Äußerung entsprechende und mittels Mikrofon empfangene akustische Signal wird in üblicher Weise in ein elektrisches Signal umgewandelt, welches anschließend abgetastet und quantisiert wird. Die so erhaltenen Digitalsignale werden zur Bildung der Merkmalsvektoren vorzugsweise einer Cepstralanalyse unterworfen. Die Bildung von Merkmalsvektoren ist in Fig. 1 - da schon bekannt - nicht näher dargestellt. Die Spracherkennungseinheit 2 speichert die Merkmalsvektoren für die weitere Verarbeitung ab und ermittelt aus diesen ein Erkennungsergebnis für die eingegebene gesamte sprachliche Äußerung. Die Spracherkennung durch die Spracherkennungseinheit 2 beruht - wie üblich - auf statistischer Sprachmodellierung, wobei sogenannte Hidden-Markov-Modelle (HMM) eingesetzt werden.

Das in der Regel noch mit Erkennungsfehlern behaftete erste Erkennungsergebnis zu der sprachlichen Äußerung wird noch nicht an den Benutzer ausgegeben, sondern es folgt eine Ausgabe einzelner erkannter Buchstaben an den Benutzer mit der Aufforderung, diese zu bestätigen oder abzulehnen. Dies wird im folgenden zur Besserung Illustration anhand einer konkreten eingegebenen sprachliche Äußerung, der Eingabe des Ortsnamens "AACHEN", näher beschrieben.

Nachdem ein Benutzer also den Ortsnamen "AACHEN" eingegeben hat und zu diesem ein erstes Erkennungsergebnis für die gesamte Äußerung vorliegt, erfolgt eine Prozedur, deren Koordinierungsmechanismen durch einen Funktionsblock 4 zusammengefaßt sind. Dabei wird eine Ausgabe einzelner erkannter Buchstaben über eine Schnittstelle 5 ("user interface", UI) bewirkt mit einer Aufforderung an den Benutzer, die Richtigkeit dieses Buchstabens entweder zu bestätigen oder abzulehnen. Die durch den Benutzer über die Schnittstelle 5 eingegebene Antwort, die als akustische Eingabe aber auch beispielsweise als Eingabe durch Bedienungstasten erfolgen kann, wird zur Bestimmung und Anpassung eines von der Spracherkennungseinheit 2 verwendeten linguistischen Modells (Funktionsblock 6) eingesetzt. Das hier verwendete linguistische Modell ist eine aus Knoten und Kanten bestehende Netzwerkgrammatik mit einer endlichen Zahl Zustände ("finite state network grammar", FSN), deren Funktionsweise später anhand der Fig. 2 und 3 noch näher erläutert wird. Die Werte der Parameter der jeweiligen von der Spracherkennungseinheit 2 verwendeten Netzwerkgrammatik des Funktionsblocks 6 werden aus einer Datenbank 7 ("data base", DB) ausgelesen, die beispielsweise bei Navigationssystemen für Landkraftfahrzeuge auf einer CD abgespeichert sind und schon in erhältlichen Systemen zur Verfügung stehen.

Angenommen sei nun beispielhaft, die Spracherkennungseinheit 2 befinde sich in einem Modus zur Eingabe von Ortsnamen und habe im ersten Schritt als Erkennungsergebnis "AADAEM" für die eingegebene sprachliche Äußerung "AACHEN" ermittelt, wobei bei den Spracherkennungsprozeduren eine Netzwerkgrammatik verwendet wurde, die noch keinerlei Einschränkung bezüglich der zu erkennenden Buchstaben der sprachlichen Äußerung enhält. Die Netzwerkgrammatik besteht bis dahin lediglich aus zwei Knoten K0 und K1, wobei als Kanten zwischen diesen beiden Knoten alle Anfangsbuchstaben der zu erkennden Orte festgelegt sind. Die Kanten zwischen den beiden Knoten K0 und K1 repräsentieren dabei die zulässigen Zustände bezüglich des ersten zu erkennenden Buchstabens. Die von K1 nach K1 laufenden Kanten umfassen alle Buchstaben des Alphabets. Bezüglich der Wirkungsweise einer derartigen Netzwerkgrammatik in der Spracherkennungseinheit 2 wird hier auf den Artikel von Nam-Yong Han et.al. "A CONTINUOUS SPEECH RECOGNITION SYSTEM USING FINITE STATE NETWORK AND VITERBI BEAM SEARCH FOR THE AUTOMATIC INTERPRETATION", ICASSP 1995, Seiten 117 bis 120 verwiesen, der nähere Erläuterungen gibt. Die Funktion und die Umsetzung einer solchen Netzwerkgrammatik kann daher hier als bekannt vorausgesetzt werden und wird nicht näher erläutert.

An den Benutzer wird nun als (richtiges) Erkennungsergebnis bezüglich des ersten Buchstabens der sprachlichen Äußerung über die Schnittstelle 5 der Buchstabe "A" ausgegeben. Nachdem der Benutzer die Richtigkeit dieses Erkennungsergebnisses bestätigt hat, wird dieses zur Anpassung der Netzwerkgrammatik benutzt. Diese wird erweitert auf ein Netzwerk mit drei Knoten K0, K1 und K2 mit einer einzigen Kante zwischen den beiden Knoten K0 und K1, die bezüglich des ersten zu erkennenden Buchstabens den Zustand "Buchstabe A" repräsentiert (siehe Fig. 2). Bezüglich des zweiten zu erkennenden Buchstabens liefert eine Abfrage der Datenbank 7 als mögliche Erkennungsergebnisse einen der Buchstaben von A bis I oder einen der Buchstaben von K bis P oder einen der Buchstaben von R bis U. Die entsprechende in Fig. 2 dargestellte angepaßte Netzwerkgrammatik weist deshalb zwischen den Knoten K1 und K2 entsprechende Kanten, die wie oben bereits erwähnt zulässigen Zuständen (hier bezüglich des zweiten Buchstabens der sprachlichen Äußerung) entsprechen, auf. Der Übersichtlichkeit wegen sind nicht alle Kanten einzeln dargestellt. In der Fig. 2 ist deshalb für die Buchstabengruppe der benachbarten Buchstaben A ... 1 nur eine Kante eingezeichnet. Entsprechendes gilt für die beiden anderen Buchstabengruppen K ... P und R ... U. Die Buchstaben J, Q und V... Z sind als nicht mehr als zweiter Buchstabe in Frage kommende Buchstaben der zu erkennenden sprachlichen Äußerung gemäß den in der Datenbank 7 abgelegten Informationen festgelegt. Diese Informationen werden aus den als zulässige Ortsnamen definierten Wörtern abgeleitet. Bezüglich des dritten Buchstabens und weiterer Buchstaben legt die Netzwerkgrammatik keine Einschränkung fest. Alle Buchstaben bzw. Buchstabenfolgen werden in diesem Verarbeitungsschritt als noch möglich angesetzt.

Unter Verwendung der angepaßten Netzwerkgrammatik gemäß Fig. 2 als linguistischem Sprachmodell wird nun durch die Spracherkennungseinheit 2 für die abgespeicherten und aus der ursprünglich eingegebenen buchstabierten sprachlichen Äußerung "AACHEN" abgeleiteten Merkmalsvektoren erneut ein Spracherkennungsvorgang durchgeführt, was wiederum zum Erkennungsergebnis "AADAEM" führt. Nachdem an den Benutzer als Vorschlag für den zweiten Buchstaben "A" ausgegeben und dieses Erkennungsergebnis vom Benutzer ebenfalls als richtig bestätigt wurde, wird unter Ausnutzung der Datenbankinformationen zu zulässigen Ortsnamen wiederum eine Anpassung des verwendeten linguistischen Sprachmodells, d.h. der Netzwerkgrammatik durchgeführt. Es ergibt sich nach der Anpassung ein auf vier Knoten K0, K1, K2 und K3 erweitertes Netzwerk, daß in Fig. 3 dargestellt ist. Entsprechend der Folge "AA" als bestätigte Anfangsbuchstaben werden diese als bekannt vorausgesetzt, so daß sowohl zwischen dem Knoten K0 und dem Knoten K1 als auch zwischen dem Knoten K1 und dem Knoten K2 nur eine Kante angesetzt wird, denen jeweils ein dem Buchstaben "A" entsprechender Zustand zugeordnet ist. Die Menge zulässiger Buchstaben für den dritten Buchstaben des zu erkennenden Ortsnamens umfaßt nun gemäß den betreffenden Datenbankinformationen nur noch die Buchstaben "C", "L", "R" oder "S". Die Fig. 3 zeigt entsprechende Kanten zwischen den beiden Knoten K2 und K3, wobei für die beiden benachbarten Buchstaben "R" und "S" der Übersichtlichkeit wegen wiederum nur eine Kante gezeichnet ist. Dieses angepaßte Netzwerk enthält keine (beschränkende) Information über den vierten und eventuelle weitere Buchstaben der zu erkennenden sprachlichen Äußerung.

Mit dem erneut modifizierten linguistischen Sprachmodell ( = Netzwerkgrammatik) wird nun ein weiterer Spracherkennungsvorgang mittels der Spracherkennungseinheit 2 durchgeführt, wobei wiederum von den gespeicherten Merkmalsvektoren der ursprünglich detektierten buchstabierten sprachlichen Äußerung "AACHEN" ausgegangen wird. Diesmal wird allerdings aufgrund des geänderten linguistischen Sprachmodells ein verbessertes Erkennungsergebnis geliefert, nämlich "AACHEM", das nur noch geringfügig von der tatsächlichen sprachlichen Äußerung abweicht.

Entsprechend den obigen Ausführungen schließen sich nun weitere Verarbeitungszyklen an, bis ein Erkennungsergebnis mit sämtlichen Buchstaben der zu erkennenden buchstabierten sprachlichen Äußerung vorliegt, bei dem alle erkannten Buchstaben als richtig bestätigt sind. Dieses Ergebnis wird schließlich vom elektrischen Gerät 1 in der von der jeweiligen Anwendung abhängigen Weise weiterverarbeitet. Im Fall eines Navigationssystems für Landkraftfahrzeuge beispielsweise als Zielort für eine Fahrroute.

Für den Fall, daß ein an den Benutzer ausgegebener Buchstabe von diesem als falsch abgelehnt wird, werden - wie nachfolgend erläutert - zwei Möglichkeiten der Weiterverarbeitung angegeben.

Eine Möglichkeit der Weiterverarbeitung besteht darin, das linguistische Modell so zu modifizieren, daß die zugehörige Kante zwischen zwei Knoten entfernt wird und mit der so modifizierten Netzwerkgrammatik ein erneuter Spracherkennungsprozeß mittels der Spracherkennungseinheit 2 für die gespeicherte sprachliche Äußerung durchgeführt wird. Beispielsweise sei angenommen, nach einer Durchführung der Spracherkennungsprozeduren durch die Spracherkennungseinheit 2 unter Zugrundelegung der Netzwerkgrammatik gemäß Fig. 2 sei als zweiter Buchstabe nicht ein "A", sondern ein "K" ermittelt worden. Nach einer Ablehnung dieses somit falsch erkannten Buchstabens durch den Benutzer würde die dem Buchstaben "K" zugeordnete Kante zwischen den Knoten K1 und K2 entfernt und mit dieser modifizierten - aber ansonsten unveränderten - Netzwerkgrammatik würde ein erneuter Erkennungsvorgang bezüglich der gesamten sprachlichen (gespeicherten) Äußerung durch die Spracherkennungseinheit 2 durchgeführt. Die Wahrscheinlichkeit, daß nunmehr der Buchstabe "A" als zweiter Buchstabe richtig erkannt würde, ist dann erhöht. Dieser Vorgang wird gegebenenfalls bis zur richtigen Erkennung des zweiten Buchstabens wiederholt.

Die andere Variante setzt eine Spracherkennungseinheit 2 voraus, die nach der Durchführung eines Erkennungsvorgangs N beste Lösungsalternativen als Erkennungsergebnis ausgibt, was eine bekannte Variante eines Spracherkenners ist. Wird nun wie oben angenommen beispielsweise der zweite Buchstabe der buchstabierten sprachlichen Äußerung nicht richtig erkannt und vom Benutzer als falsch abgelehnt, so entfällt ein erneutes Durchführen eines Erkennungsvorgangs mittels der Spracherkennungseinheit 2. Stattdessen schließt der Funktionsblock 4 eine Verarbeitung ein, bei der automatisch die zweitbeste Lösungsvariante der Liste N bester Lösungsalternativen zur Ermittlung des zweiten Buchstabens der sprachlichen Äußerung verwendet wird. Ist auch jetzt noch der erkannte zweite Buchstabe falsch und wird vom Benutzer abgelehnt, wird der zweite Buchstabe der drittbesten Lösungsvariante der Liste N bester Lösungsalternativen an den Benutzer ausgegeben. Diese Verarbeitung setzt sich solange fort, bis der Benutzer einen an ihn ausgegebenen Buchstaben als richtig bestätigt.

Zur Beschleunigung des erfindungsgemäßen Arbeitsverfahrens kann weiterhin vorgesehen werden, daß den als Nachfolger eines vom Benutzer bestätigten Buchstabens in Frage kommenden Buchstaben individuelle Wahrscheinlichkeitswerte zugeordnet werden. Beispielsweise werden dann in der Netzwerkgrammatik gemäß Fig. 2 bezüglich der Kanten zwischen den beiden Knoten K1 und K2 der Kante mit dem Buchstaben "A" ein erster Wahrscheinlichkeitswert, der Kante mit dem Buchstaben "B" ein zweiter Wahrscheinlichkeitswert und den anderen Kanten mit den Buchstaben "C" bis "I", "K" bis "P" und "R" bis "U" entsprechende individuelle Wahrscheinlichkeitswerte zugeordnet. Die Größe der einzelnen Wahrscheinlichkeitswerte hängt dabei von den statistischen Eigenschaften des bei der jeweiligen Anwendung des elektrischen Geräts 1 verwendeten Vokabulars ab.

Bestimmte Buchstaben sind als akustische Signale bestimmten anderen Buchstaben ähnlicher als den übrigen Buchstaben des verwendeten Alphabets. So ist beispielsweise die akustische Realisierung des Buchstabens "D" der akustischen Realisierung des Buchstabens "T" ähnlicher als den akustischen Realisierungen anderer Buchstaben. Dies wird in einer Ausführungsvariante der Erfindung berücksichtigt. Wird ein Buchstabe der buchstabierten Äußerung nicht richtig erkannt und vom Benutzer als falsch abgelehnt, so entfällt ein erneutes Durchführen eines Erkennungsvorgangs mittels der Spracherkennungseinheit 2. Stattdessen wird ein akustisch ähnlicher Buchstabe angeboten. Die akustische Ähnlichkeit zwischen Buchstaben kann z.B. statistisch berechnet werden.

Eine weitere Verfeinerung des linguistischen Sprachmodells ergibt sich dadurch, daß bestimmte Anfangsbuchstaben oder Anfangsbuchstabenkombinationen a priori als unzulässig eingeordnet werden. Beispielsweise wäre die Buchstabenfolge "XX" bei der Eingabe eines Ortsnamens unzulässig, da kein Ortsname mit solchen Anfangsbuchstaben existiert. Erkennt der Erkenner eine solche Anfangsbuchstabenfolge, so wird das linguistische Modell dahingehend modifiziert, daß der Erkenner im nächsten Erkennungslauf diese Kombination ausschließt. Bei der Spracherkennung mittels der Spracherkennungseinheit 2 ist dann der Suchraum entsprechend eingeschränkt und eine Ermittlung von Erkennungsergebnissen mit a priori als unzulässig definierten Anfangsbuchstabenfolgen wird von vornherein vermieden.

In einer weiteren Ausgestaltung des elektrischen Geräts 1 werden einzelne Buchstaben oder Buchstabenkombinationen, die gemäß den in der Datenbank abgelegten Informationen als alleinige Nachfolger für einen vom Benutzer bestätigten Buchstaben in Betracht kommen, automatisch als bestätigte Buchstaben definiert, ohne daß in solchen Fällen noch für diese Buchstaben jeweils eine Bestätigungsprozedur duchgeführt wird. Auch dies führt zu einer beschleunigten Erkennung der buchstabierten sprachlichen Äußerung und erhöht der Komfort für den Benutzer.

Insbesondere kann es auch ausreichen, wenn der Benutzer nur einen Teil der zu erkennenden sprachlichen Äußerung buchstabiert und als akustisch zu modellierende Buchstabenfolge eingibt. Auch dann wird regelmäßig noch eine befriedigend schnelle Erkennung der sprachlichen Äußerung durch das erfindungsgemäße elektrische Gerät 1 bzw. Verfahren gewährleistet.

## Patentansprüche

1. Verfahren zur automatischen Erkennung einer wenigstens teilweise buchstabierten sprachlichen Äußerung mit einer auf statistischen Modellen einschließlich eines linguistischen Sprachmodells (6) basierenden Spracherkennungseinheit (2), wobei:
- nach Eingabe des buchstabierten Teils der sprachlichen Äußerung die Spracherkennungseinheit (2) ein erstes Erkennungsergebnis für die sprachliche Äußerung ermittelt;
- einzelne erkannte Buchstaben an den Benutzer zur Bestätigung oder Ablehnung ausgegeben werden;
- nach Bestätigung eines Buchstabens eine Anpassung des linguistischen Sprachmodells (6) vorsehen ist, das nach seiner Anpassung die Menge solcher Buchstaben festlegt, die als Nachfolger für den bestätigten Buchstaben zulässig sind, und das die Richtigkeit bereits bestätigter Buchstaben voraussetzt;
- die Spracherkennungseinheit (2) mittels des angepaßten linguistischen Sprachmodells (6) ein weiteres Erkennungsergebnis für die sprachliche Äußerung ermittelt, aus dem der nächste an den Benutzer zur Bestätigung auszugebende Buchstabe bestimmt wird.

2. Verfahren nach Anspruch 1,
dadurch gekennzeichnet,
daß nach einer Ablehnung eines erkannten Buchstabens das linguistische Sprachmodell (6) entsprechend dieser Information angepaßt wird und die Spracherkennungseinheit (2) einen erneuten Erkennungsvorgang durchführt.

3. Verfahren nach Anspruch 1,
dadurch gekennzeichnet,
daß die Spracherkennungseinheit (2) als Erkennungsergebnis eine Liste N bester Erkennungsalternativen für die sprachliche Äußerung ermittelt und daß nach einer Ablehnung eines erkannten Buchstabens durch den Benutzer der entsprechende Buchstabe der zweitbesten Lösungsalternative an den Benutzer ausgegeben wird.

4. Verfahren nach einem der Ansprüche 1 bis 3,
dadurch gekennzeichnet,
daß einzelnen Buchstaben individuelle insbesondere von allen Vorgängerbuchstaben abhängige, positionspezifische) Wahrscheinlichkeitswerte zugeordnet werden.

5. Verfahren nach einem der Ansprüche 1 bis 4,
dadurch gekennzeichnet,
daß bei der Ermittlung einer Alternative zu einem durch den Benutzer abgelehnten Buchstaben der durch Wahrscheinlichkeitswerte ausgedrückte Grad der Verwechselbarkeit mit anderen Buchstaben berücksichtigt wird.

6. Verfahren nach einem der Ansprüche 1 bis 5,
dadurch gekennzeichnet,
- daß ungültige und fälschlicherweise erkannte Anfangsbuchstabenkombinationen im linguistischen Sprachmodell (6) als unzulässig definiert und dem Benutzer nicht vorgeschlagen werden;
- die Spracherkennungseinheit (2) mittels des angepaßten linguistischen Sprachmodells (6) in solch einem Fall ein weiteres Erkennungsergebnis für die sprachliche Äußerung ermittelt, aus dem der an den Benutzer zur Bestätigung auszugebende Buchstabe bestimmt wird.

7. Verfahren nach einem der Ansprüche 1 bis 6,
dadurch gekennzeichnet,
daß Buchstaben, für die keine Erkennungsalternativen bestehen, automatisch auch ohne Bestätigung durch den Benutzer als bestätigte Buchstaben verarbeitet werden.

8. Elektrisches Gerät (1), insbesondere Navigationssystem für Landkraftfahrzeuge, zur Durchführung eines Verfahrens nach einem der Ansprüche 1 bis 6.
